# EUROPEAN PATENT APPLICATION

(11) **EP 4 636 566 A1**
(43) Date of publication of application: **22.10.2025**
(21) Application number: 24814198.8
(22) Date of filing: 16.05.2024
(51) Int. Cl.: G06F 3/14

(54) **DISPLAY METHOD AND DEVICE**

(30) Priority: 31.05.2023 CN 202310647147
(71) Applicant: Huawei Technologies Co., Ltd., Shenzhen, Guangdong 518129 (CN)
(72) Inventor: CAI, Shiqi, Shenzhen, Guangdong 518129 (CN)
(74) Representative: Körber, Martin Hans
(86) International application number: PCT/CN2024/093771
(87) International publication number: WO 2024/244998

(57) **Abstract**

Embodiments of this application provide a display method and device, and relate to the field of display devices. In this method, a plurality of windows are displayed. The plurality of windows include n first windows, n is an integer greater than or equal to 2, and the first window is a non-floating window. When a preset condition is met, a first location of a floating window is determined. The floating window is displayed at the first location. The floating window does not block at least two windows in the n first windows. In the method, when the preset condition is met, the first location of the floating window is determined, and the floating window is displayed at the first location, so that the floating window does not block the at least two windows in the n first windows. A user does not need to manually operate the floating window, and the floating window can automatically avoid the first windows. This can increase a quantity of first windows that are not blocked, so that key information of more windows is provided for the user, and use experience of a display device of the user is improved.

## Description

This application claims priority to Chinese Patent Application No. 202310647147.9, filed with the China National Intellectual Property Administration on May 31, 2023 and entitled "DISPLAY METHOD AND DEVICE", which is incorporated herein by reference in its entirety.

### TECHNICAL FIELD

Embodiments of this application relate to the field of display devices, and in particular, to a display method and device.

### BACKGROUND

As a size of a screen of a display device becomes larger, there may be multi-window (or multi-control) display scenarios, such as a multi-window operation scenario, a multi-task scenario, or a picture-in-picture scenario, on the screen to implement parallel processing of tasks. However, in the foregoing multi-window display scenarios, windows are displayed in an overlapping manner, and key information of a lower-layer window is blocked. When a user wants to view the key information of the lower-layer window, the user needs to move an upper-layer window away first, causing poor user experience of using the device. How to prevent the key information of the lower-layer window from being blocked is a technical problem that needs to be urgently resolved in this field.

### SUMMARY

This application provides a display method and a device, so that a floating window can automatically avoid a lower-layer non-floating window for display.

A first aspect provides a display method. The display method may be applied to a display device or a chip in a display device. Specifically, the method includes the following steps: displaying a plurality of windows, where the plurality of windows include n first windows, n is an integer greater than or equal to 2, and the first window is a non-floating window; when a preset condition is met, determining a first location of a floating window; and displaying the floating window at the first location, where the floating window does not block at least two windows in the n first windows.

It can be learned that in this solution, when the preset condition is met, the first location of the floating window is determined, and the floating window is displayed at the first location, so that the floating window does not block the at least two windows in the n first windows. A user does not need to manually operate the floating window, and the floating window can automatically avoid the first windows. This can increase a quantity of first windows that are not blocked, so that key information of more windows is provided for the user, and use experience of the display device of the user is improved.

In a possible implementation of the first aspect, the preset condition includes any one of the following: a floating window is added; a display location of the floating window is updated; or a display area of the floating window is updated.

When a new floating window is to appear on a display, the method in this embodiment of this application is used to determine a display location of the floating window, that is, the first location.

When the display location of the floating window is updated, for example, the user drags the location of the floating window from a display location A to a display location B, the method in this embodiment of this application is used to re-determine a display location of the floating window, that is, the first location.

When the display area of the floating window is updated (becomes larger or smaller), a blocking relationship between the changed floating window and a lower-layer first window changes. In this case, the method in this embodiment of this application is used to re-determine a display location of the floating window.

In a possible implementation of the first aspect, there are avoidance priorities between the n first windows. The avoidance priorities of the first windows may be set based on an actual situation, and this is not specially limited. For example, the avoidance priorities of the first windows are set based on degrees of importance to the user.

In a possible implementation of the first aspect, determining the first location of the floating window specifically includes the following steps: when a window blocked by the floating window is one first window in the n first windows, determining at least one candidate location corresponding to the first window, where when the floating window is displayed at the at least one candidate location, the floating window does not block at least the first window and a window whose avoidance priority is higher than an avoidance priority of the first window; and determining a candidate location with a largest avoidance quantity in the at least one candidate location as the first location, where an avoidance quantity of the candidate location is a quantity of first windows that are in the n first windows and that are not blocked when the floating window is displayed at the candidate location.

It can be learned that this solution provides a possible method for determining the first location of the floating window. The method can ensure that a first window with a higher avoidance priority is not blocked by the floating window, so that the user can smoothly learn key information carried in the first window with a higher avoidance priority.

In a possible implementation of the first aspect, determining the first location of the floating window specifically includes the following steps: when windows blocked by the floating window are two or more first windows in the n first windows, determining at least one candidate location corresponding to each blocked first window, where when the floating window is displayed at the at least one candidate location, the floating window does not block at least the blocked first window and a window whose avoidance priority is higher than an avoidance priority of the blocked first window; and determining a candidate location with a largest avoidance quantity as the first location, where an avoidance quantity of the candidate location is a quantity of first windows that are in the n first windows and that are not blocked when the floating window is displayed at the candidate location.

In a possible implementation of the first aspect, when windows blocked by the floating window are two or more first windows in the n first windows, determining the first location of the floating window includes the following steps:
determining, from the windows that are blocked by the floating window and that are in the n first windows, one window as a second window; determining at least one candidate location of the second window, where the at least one candidate location does not block the second window, and the floating window can be completely displayed at the candidate location; when a window whose avoidance priority is higher than an avoidance priority of the second window is blocked by the floating window displayed at a candidate location, removing the candidate location from the at least one candidate location; when an avoidance quantity of the candidate location is equal to n, using the candidate location as the first location, and stopping performing the following steps, where the avoidance quantity of the candidate location is a quantity of first windows that are in the n first windows and that are not blocked when the floating window is displayed at the candidate location; when an avoidance quantity of the candidate location is less than n, recording the avoidance quantity of the candidate location; removing the second window from the windows blocked by the floating window, and repeating the foregoing steps until there is no window blocked by the floating window; and using a candidate location with a largest avoidance quantity in recorded avoidance quantities as the first location.

It can be learned that, this solution provides another possible method for determining the first location of the floating window. In the method, each candidate location is polled, and when the avoidance quantity of the candidate location is equal to n, the candidate location is used as the first location and the subsequent steps are stopped, so that a calculation amount of determining the first location can be reduced to some extent, a speed of determining the first location is improved, and use experience of the display device of the user is improved.

In a possible implementation of the first aspect, when windows blocked by the floating window are two or more first windows in the n first windows, determining the first location of the floating window includes the following steps:
determining, from the windows that are blocked by the floating window and that are in the n first windows, a window with a highest avoidance priority as a second window; determining at least one candidate location of the second window, where the at least one candidate location does not block the second window, and the floating window can be completely displayed at the candidate location; when a window whose avoidance priority is higher than an avoidance priority of the second window is blocked by the floating window displayed at a candidate location, removing the candidate location from the at least one candidate location; when an avoidance quantity of the candidate location is equal to n, using the candidate location as the first location, and stopping performing the following steps, where the avoidance quantity of the candidate location is a quantity of first windows that are in the n first windows and that are not blocked when the floating window is displayed at the candidate location; when an avoidance quantity of the candidate location is less than n, recording the avoidance quantity of the candidate location; removing the second window from the windows blocked by the floating window, and repeating the foregoing steps until there is no window blocked by the floating window; and using a candidate location with a largest avoidance quantity in recorded avoidance quantities as the first location.

It can be learned that, this solution provides another possible method for determining the first location of the floating window. In the method, each candidate location is polled based on an avoidance priority, and when the avoidance quantity of the candidate location is equal to n, the candidate location is used as the first location and the subsequent steps are stopped, so that a calculation amount of determining the first location can be further reduced, a speed of determining the first location is improved, and use experience of the display device of the user is improved.

In a possible implementation of the first aspect, when the avoidance quantity of the candidate location is less than n, if the avoidance quantity of the candidate location is inconsistent with the recorded avoidance quantity of the candidate location, or when the avoidance quantity of the candidate location is consistent with the recorded avoidance quantity of the candidate location, and an avoidance priority of a window corresponding to the candidate location is not lower than an avoidance priority of a window corresponding to the recorded candidate location, the avoidance quantity of the candidate location is recorded.

On the contrary, when the avoidance quantity of the candidate location is less than n, and the avoidance quantity of the candidate location is consistent with the recorded avoidance quantity of the candidate location, the avoidance quantity of the candidate location is not recorded. Alternatively, when the avoidance quantity of the candidate location is less than n, the avoidance quantity of the candidate location is consistent with the recorded avoidance quantity of the candidate location, and an avoidance priority of a window corresponding to the candidate location is lower than an avoidance priority of a window corresponding to the recorded candidate location, the avoidance quantity of the candidate location is not recorded. This helps reduce a data volume of the recorded avoidance quantity, further increases a calculation amount of subsequently determining the first location based on the avoidance quantity, and improves a speed of determining the first location.

**In** a possible implementation of the first aspect, when there are a plurality of candidate locations with the largest avoidance quantity, a candidate location corresponding to a window with a highest avoidance priority in the plurality of candidate locations with the largest avoidance quantity is selected as the first location.

It can be learned that, when there are a plurality of candidate locations with the largest avoidance quantity, the candidate location with the highest avoidance priority is selected as the first location, so that it can be ensured that a first window with a high avoidance priority is not blocked, and the user can smoothly learn key information carried in the first window with the high avoidance priority.

A second aspect further provides a display method. The display method is applied to a display device or a chip in a display device. Specifically, the method includes the following steps: displaying a plurality of windows, where the plurality of windows include a floating window and n first windows, n is an integer greater than or equal to 2, and the first window is a non-floating window; when the n first windows are updated, determining a first location of the floating window, where the update includes that at least one window in the n first windows is replaced and/or a total quantity of windows increases; and displaying the floating window at the first location, where the floating window does not block at least two windows in a plurality of updated first windows.

It can be learned that, based on this solution, when the n first windows are updated, the first location of the floating window is determined, so that the floating window does not block the at least two windows in a plurality of updated first windows. A user does not need to manually operate the floating window, and the floating window can automatically avoid the first windows. This can increase a quantity of first windows that are not blocked, so that key information of more windows is provided for the user, and use experience of a display device of the user is improved.

In a possible implementation of the second aspect, there are avoidance priorities between the first windows.

In a possible implementation of the second aspect, determining the first location of the floating window specifically includes the following steps: when a window blocked by the floating window is one first window in the plurality of updated first windows, determining at least one candidate location corresponding to the blocked first window, where when the floating window is displayed at the at least one candidate location, the floating window does not block at least the first window and a window whose avoidance priority is higher than an avoidance priority of the first window; and determining a candidate location with a largest avoidance quantity in the at least one candidate location as the first location, where an avoidance quantity of the candidate location is a quantity of first windows that are in the plurality of updated first windows and that are not blocked when the floating window is displayed at the candidate location.

In a possible implementation of the second aspect, determining the first location of the floating window specifically includes the following steps: when windows blocked by the floating window are two or more first windows in the plurality of updated first windows, determining at least one candidate location corresponding to each blocked first window, where when the floating window is displayed at the at least one candidate location, the floating window does not block at least the blocked first window and a window whose avoidance priority is higher than an avoidance priority of the blocked first window; and determining a candidate location with a largest avoidance quantity as the first location, where an avoidance quantity of the candidate location is a quantity of first windows that are in the plurality of updated first windows and that are not blocked when the floating window is displayed at the candidate location.

In a possible implementation of the second aspect, when there are a plurality of candidate locations with the largest avoidance quantity, a candidate location corresponding to a window with a highest avoidance priority in the plurality of candidate locations with the largest avoidance quantity is selected as the first location.

A third aspect further provides a display apparatus, where the display apparatus includes a module or a unit configured to implement or perform the steps of the display method according to the first aspect or the second aspect.

A fourth aspect further provides a display device, including a processor and a memory, where the processor is connected to the memory, the memory is configured to store program code, and the processor is configured to invoke the program code to perform the display method according to the first aspect or the second aspect.

A fifth aspect further provides a readable storage medium, where the readable storage medium stores a program, and the program is executed by a processor to perform the display method according to the first aspect or the second aspect.

A sixth aspect further provides a program product including instructions. When the program product runs on a device, the device is enabled to perform the display method according to the first aspect or the second aspect.

A seventh aspect further provides a chip, where the chip includes a processor and a data interface, and the processor reads, through the data interface, instructions stored in a memory, to perform the display method according to the first aspect or the second aspect.

Optionally, in an implementation, the chip may further include the memory. The memory stores the instructions. The processor is configured to execute the instructions stored in the memory. When the instructions are executed, the processor is configured to perform the display method according to the first aspect or the second aspect.

### BRIEF DESCRIPTION OF DRAWINGS

The following describes accompanying drawings used in embodiments of this application.
FIG. 1A is a diagram of a non-floating window according to an embodiment of this application;
FIG. 1B is a diagram of a floating window according to an embodiment of this application;
FIG. 1C is a diagram of an effect of a display method according to an embodiment of this application;
FIG. 2 is a schematic flowchart of a display method according to an embodiment of this application;
FIG. 3 is a specific schematic flowchart of a display method according to an embodiment of this application;
FIG. 4 is a schematic flowchart of another display method according to an embodiment of this application;
FIG. 5A is a diagram of a first window and a floating window according to an embodiment of this application;
FIG. 5B is another diagram of a first window and a floating window according to an embodiment of this application;
FIG. 5C is another diagram of a first window and a floating window according to an embodiment of this application;
FIG. 6 is a specific schematic flowchart of another display method according to an embodiment of this application;
FIG. 7 is a diagram of a structure of a display apparatus according to an embodiment of the present invention; and
FIG. 8 is a diagram of a structure of a display device according to an embodiment of the present invention.

### DESCRIPTION OF EMBODIMENTS

The following describes technical solutions of this application with reference to accompanying drawings.

Embodiments of this application relate to an application. Therefore, for ease of understanding, the following first describes related concepts such as related terms in embodiments of this application.

In embodiments of this application, words such as "example" or "for example" are used to give an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

In embodiments of this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. Sequence numbers of steps (for example, step S1 and step S21) in embodiments ofthis application are merely used to distinguish between different steps, and do not limit a performing sequence of the steps.

In addition, unless otherwise stated, ordinal numbers such as "first" and "second" used in embodiments of this application are for differentiation between a plurality of objects, and are not intended to limit a sequence, a time sequence, priorities, or importance degrees of the plurality of objects. For example, a first device and a second device are merely for ease of description, and do not indicate a difference of the first device and the second device in terms of a structure and a degree of importance. In some embodiments, the first device and the second device may alternatively be the same device.

According to the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

As a size of a screen of a display device becomes larger, there may be multi-window (or multi-control) overlaying scenarios, such as a multi-window operation scenario, a multi-task scenario, or a picture-in-picture scenario, on the screen to implement parallel processing of tasks. For a display device that supports touch control, a user may manually drag an upper-layer window to avoid blocking a lower-layer window, to obtain key information of the lower-layer window. However, manual operation processing efficiency is low, and user experience of obtaining information is poor.

Therefore, embodiments of this application provide a display method. A floating window can automatically avoid a non-floating window for display, and the floating window can avoid at least two non-floating windows at the same time, to increase a quantity of windows that are not blocked, so as to provide display information of more windows for a user.

The display method in embodiments of this application is applicable to a scenario of display of upper and lower layers, for example, a multi-window operation scenario, a multi-task scenario, or a picture-in-picture scenario. In other words, embodiments of this application may be applied to a scenario in which there are both a floating window and a non-floating window.

The floating window is a window that is floating on the non-floating window and that is movable. The floating window may be used to display information, for example, application information or system prompt information.

In embodiments of this application, each non-floating window carries key information, where the key information is various information that the user expects to learn. For example, the key information includes but is not limited to two-dimensional code, PIN code display, picture display, a bottom-layer focus (that is, a focused object, an object that is being operated by the user), and system background prompt information (for example, system prompt information about running a program in a background) of a bottom-layer window.

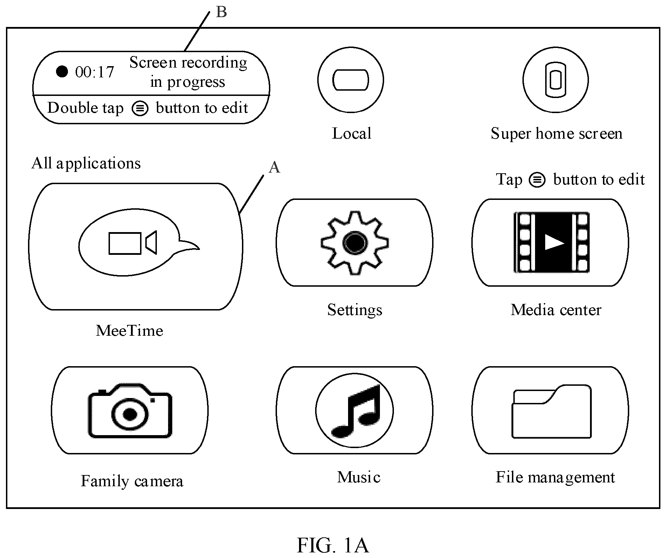

The non-floating window may be a display window corresponding to a focused region, that is, a window of an area that is being used or operated by the user. In this case, the user does not want the display window to be blocked, and uses the display window as an object that needs to be avoided by the floating window. FIG. 1A is a diagram of a non-floating window according to an embodiment of this application. A window A is a display window corresponding to a MeeTime application, and is an example of the non-floating window. The window A is a display window corresponding to a current focused region.

The non-floating window may alternatively be a display window corresponding to a region that has no focus obtaining capability but that expects to be perceived by the user. This type of non-floating window may be set based on an actual situation. For example, if an application E actively reports to a system that the application E expects to be avoided by a floating window, a display window of the application, for example, a display window in which an application identifier and an application name are located, is used as a non-floating window. Alternatively, the user uses, based on an actual requirement, a display window in which an application identifier and an application name of the application F are located as a non-floating window. With reference to 1A, a "screen recording" window B is a display window corresponding to background prompt information, and the window B is another example of a non-floating window. The window B has no focus obtaining capability but expects to be perceived by the user, and may be used as an avoidance object of the floating window.

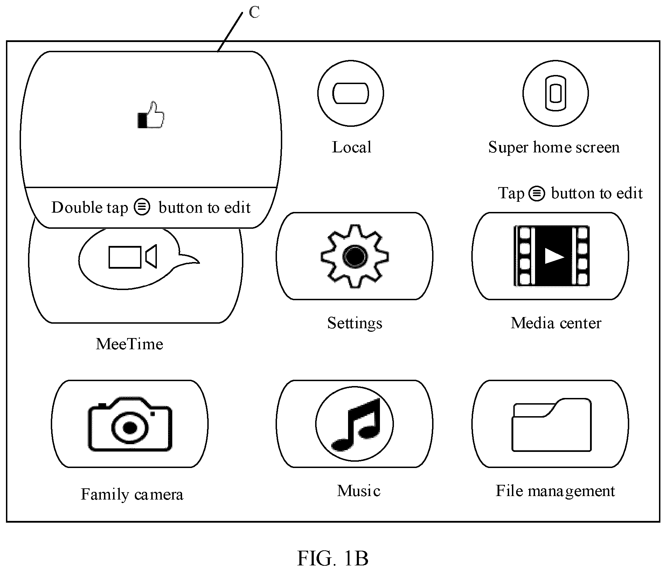

FIG. 1B is a diagram of a floating window according to an embodiment of this application. A window C is a floating window, and display content of the window C may be set based on an actual situation.

The display method in embodiments of this application may be applied to a display device or a chip in a display device. In the following descriptions, a display device is used as a method execution body for description.

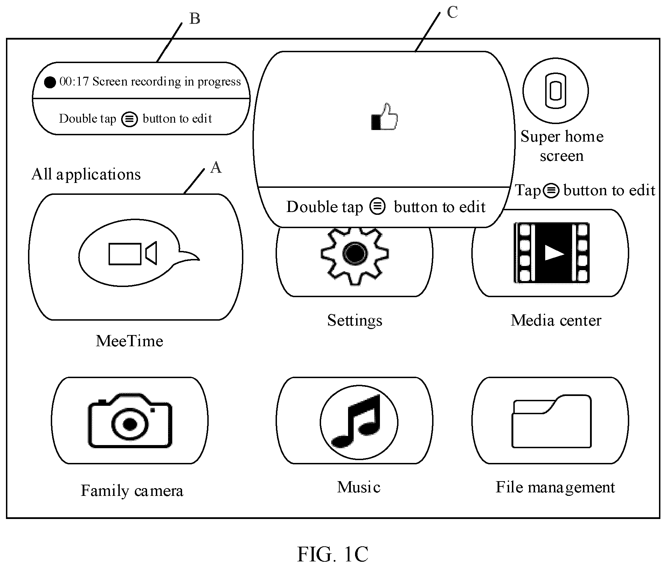

With reference to FIG. 1B, the window A and the window B are blocked by the floating window C. FIG. 1C is a diagram of an effect of a display method according to an embodiment of this application. According to the display method in embodiments of this application, the display device displays the floating window C at a first location, so that the window A and the window B can be avoided, and the window A and the window B are not blocked. The user can learn the key information carried by the window A and the window B without manually moving the floating window C.

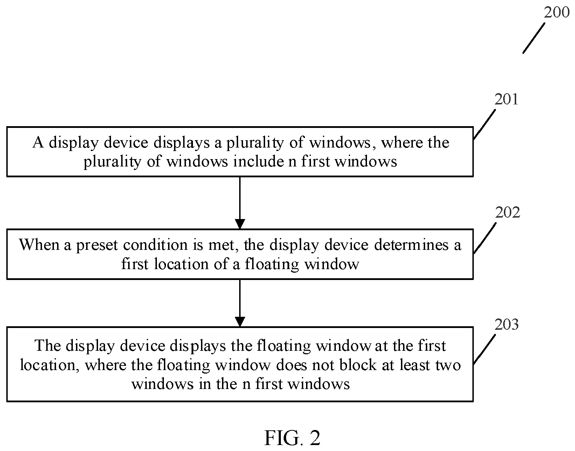

The following specifically describes a display method provided in an embodiment of this application. FIG. 2 is a schematic flowchart of a display method according to an embodiment of this application. A display method 200 includes the following steps.

201: A display device displays a plurality of windows, where the plurality of windows include n first windows.

Herein, n is an integer greater than or equal to 2, and the first window is a non-floating window. The first window is a target avoidance object, that is, a window that a user expects not to be blocked. A specific type and quantity of the first windows may be set based on an actual situation.

202: When a preset condition is met, the display device determines a first location of a floating window.

Specifically, the preset condition may be set based on an actual situation, and this is not specially limited herein. When the preset condition is met, the display device needs to determine a display location of the floating window, that is, the first location.

203: The display device displays the floating window at the first location, where the floating window does not block at least two windows in the n first windows.

Specifically, the first location determined in step 202 may enable that the floating window does not block the at least two windows in the n first windows.

It can be learned that, according to the display method 200 in this embodiment of this application, the user does not need to manually operate the floating window, and the floating window can automatically avoid the first windows. This can increase a quantity of first windows that are not blocked, so that key information of more windows is provided for the user, and use experience of the display device of the user is improved.

In addition, according to the method in this embodiment of this application, an obvious visual effect sacrifice to a display attribute of the first window is not required, for example, zooming, transparency change, and three-dimensional rotation, so that key information is normally displayed to a maximum extent while a screen visual effect is ensured. In addition, in this embodiment of this application, application scenarios of the floating window and the first window are not limited, and the user can start various windows as required.

The preset condition includes any one of the following: a floating window is added; a display location of the floating window is updated; or a display area of the floating window is updated.

Specifically, when the floating window is to be displayed on a display of the display device, the display device uses the method in this embodiment of this application, to determine the display location of the floating window, that is, the first location, so that the floating window does not block at least two first windows in the n first windows.

When the display location of the displayed floating window is updated, for example, the user drags the floating window from a display location A to a display location B, the display device uses the method in this embodiment of this application, to re-determine a display location of the floating window, that is, the first location, so that the floating window does not block at least two first windows in the n first windows.

When the display area of the displayed floating window is updated (becomes larger or smaller), a blocking relationship between the changed floating window and a lower-layer first window changes. In this case, the display device uses the method in this embodiment of this application to re-determine a display location of the floating window.

When the display location of the displayed floating window is updated and the display area of the floating window is updated, a blocking relationship between the changed floating window and a lower-layer first window changes. In this case, the display device uses the method in this embodiment of this application to re-determine a display location of the floating window.

Further, the foregoing preset condition further needs to meet the following condition: When a first window that is blocked by the floating window exists, that is, when there is a first window that is blocked by the displayed floating window, the display device uses the method in this embodiment of this application to determine the display location of the floating window. Alternatively, when the display location and/or the display area of the displayed floating window changes, and there is a first window that is blocked by the floating window, the display device uses the method in this embodiment of this application to re-determine a display location of the floating window.

When there are two or more floating windows, for each floating window that meets the foregoing preset condition, a first location may be determined according to the display method in this embodiment of this application.

In a possible implementation, in the plurality of windows displayed on the display, avoidance priorities of the n first windows are higher than a priority of another window other than the n first windows in the plurality of windows (that is, the n first windows are objects that need to be avoided). However, when no avoidance priority is set between the n first windows, or when the plurality of windows are the n first windows and no avoidance priority is set between the n first windows, in step 202, that the display device determines the first location of the floating window specifically includes the following steps:
A221: The display device determines, from the windows that are blocked by the floating window and that are in the n first windows, one window as a target window. When there are two or more blocked first windows, the display device determines, according to a preset rule, one of the blocked first windows as the target window. When there is one blocked first window, the display device uses the blocked first window as the target window.

Specifically, the preset rule may be set based on an actual situation. For example, in the first windows that are displayed on the display and that are blocked by the floating window, the windows are traversed randomly, or the windows are traversed in an order from left to right and an order from bottom to top, or the windows are traversed in an order from right to left and an order from bottom to top.

A222: The display device determines at least one candidate location corresponding to the target window, where when the floating window is displayed at the at least one candidate location of the target window, the floating window does not block the target window.

Specifically, for each candidate location of the target window, the floating window does not block at least the target window when the floating window is displayed at a candidate location.

There are many methods for determining the candidate location of the floating window that needs to avoid the blocked target window. For example, an upper location, a lower location, a left location, or a right location of the target window may be used as a to-be-determined candidate location. When the floating window can be completely displayed at the to-be-determined candidate location, the display device uses the to-be-determined candidate location as the candidate location. For another example, after at least one operation like zooming, translation, or rotation is performed on the floating window, a location at which the blocked target window can be avoided and the floating window can be completely displayed is obtained, and the display device determines the location as the candidate location of the target window.

A223: When an avoidance quantity of the candidate location is equal to n, the display device uses the candidate location as the first location, and stops the following steps. The avoidance quantity of the candidate location is a quantity of first windows that are in the n first windows and that are not blocked when the floating window is displayed at the candidate location.

A224: When an avoidance quantity of the candidate location is less than n, the display device records the avoidance quantity of the candidate location. After determining avoidance quantities of all candidate locations of the target window in a preset order, the display device removes the target window from the first windows that are blocked by the floating window, and repeats the foregoing steps, that is, returns to step A221, until there is no first window blocked by the floating window.

Specifically, the preset order may be set based on an actual situation, and this is not particularly limited. For example, a candidate location is sequentially determined in an order from left to right and from bottom to top, to determine an avoidance quantity of the candidate location. Alternatively, a candidate location is sequentially determined in an order from right to left and from bottom to top, to determine an avoidance quantity of the candidate location.

A225: The display device uses a candidate location with a largest avoidance quantity in recorded avoidance quantities as the first location.

When there are a plurality of candidate locations with a largest avoidance quantity, the display device may determine one candidate location from the plurality of candidate locations as the first location. There are many determining methods. For example, the display device randomly selects a candidate location from the plurality of candidate locations as the first location. Alternatively, the display device traverses the candidate locations in an order from left to right and an order from bottom to top, and determines a candidate location as the first location (that is, a candidate location that is at a bottom leftmost part of the display is selected). Alternatively, the display device traverses the candidate locations in an order from right to left and an order from bottom to top, and determines a candidate location as the first location (that is, a candidate location that is at a bottom rightmost part of the display is selected).

Optionally, there are avoidance priorities between the n first windows, and the avoidance priority of the first window may be set based on an actual situation. This is not particularly limited. For example, the avoidance priority of the first window may be determined based on degrees of importance to the user. A first window of high importance to the user has a high avoidance priority. A first window of low importance to the user has a low avoidance priority. For example, there are an application A and an application B on the display. The application B is background system prompt information, and the application A is a focused object, and prompt information of the application A needs to be learned by the user in time. In this case, an avoidance priority of a window corresponding to the application A is lower than an avoidance priority of a window of the application B.

For another example, the user may customize the avoidance priorities of the n first windows, and set the avoidance priorities as required, to adapt to avoidance requirements of different users, and ensure that key information that the user wants to learn can be learned in time.

Further, optionally, in the plurality of windows displayed on the display device, in addition to the n first windows that have the avoidance priorities, another window that does not have an avoidance priority may be further displayed.

In a possible implementation, when there are the avoidance priorities between the n first windows, in step 202, that the display device determines the first location of the floating window specifically includes the following steps.

B221: When a window blocked by the floating window is one first window in the n first windows, the display device determines at least one candidate location corresponding to the first window, where when the floating window is displayed at the at least one candidate location, the floating window does not block at least the first window and a window whose avoidance priority is higher than an avoidance priority of the first window.

Specifically, for each candidate location of the first window, the floating window does not block at least the first window and a window whose avoidance priority is higher than the avoidance priority of the first window when the floating window is displayed at a candidate location.

When the floating window is displayed at a candidate location, and the window whose avoidance priority is higher than the avoidance priority of the first window is blocked, the display device removes the candidate location, to ensure that key information of a window whose avoidance priority is high can be learned of by the user.

For specific descriptions of determining the candidate location of the first window, refer to the related descriptions of step A222. Details are not described again.

For example, when determining whether the candidate location causes the floating window to block a window with a higher avoidance priority, the display device may establish a priority table based on the avoidance priorities between the first windows. In the priority table, a first window with a high avoidance priority is arranged in front, and a first window with a low avoidance priority is arranged behind. With reference to the following Table 1, a first window 1 to a first window 6 are used as examples. It can be learned that the first window 1 has a highest avoidance priority, and the first window 6 has a lowest avoidance priority.

**Table 1**

| Window |
|---|
| First window 1 |
| First window 5 |
| First window 3 |
| First window 2 |
| First window 4 |
| First window 6 |

Based on the priority table, the display device may determine whether a candidate location causes the floating window to block a window with a higher avoidance priority. For example, when determining a candidate location of the first window 2, the display device may learn, by searching Table 1, that it needs to be determined whether the first window 1, the first window 5, and the first window 3 are blocked when the floating window is displayed at the candidate location. For example, a sequence number of an avoidance priority may alternatively be allocated to each first window. A smaller sequence number indicates a higher avoidance priority. A priority table is obtained in this manner. Refer to the following Table 2.

**Table 2**

| Window | Priority number |
|---|---|
| First window 1 | 1 |
| First window 2 | 4 |
| First window 3 | 3 |
| First window 4 | 5 |
| First window 5 | 2 |
| First window 6 | 6 |

For another example, a sequence number of an avoidance priority may alternatively be allocated to each first window. A larger sequence number indicates a higher avoidance priority. A priority table is obtained in this manner. Refer to the following Table 3.

**Table 3**

| Window | Priority number |
|---|---|
| First window 1 | 6 |
| First window 2 | 3 |
| First window 3 | 4 |
| First window 4 | 2 |
| First window 5 | 5 |
| First window 6 | 1 |

B222: The display device determines a candidate location with a largest avoidance quantity in the at least one candidate location as the first location, where an avoidance quantity of the candidate location is a quantity of first windows that are in the n first windows and that are not blocked when the floating window is displayed at the candidate location.

Specifically, the avoidance quantity of the candidate location is a quantity of windows that are in the n first windows and that are not blocked by the floating window when the floating window is displayed at the candidate location.

In a possible implementation, when there are the avoidance priorities between the n first windows, in step 202, that the display device determines the first location of the floating window specifically includes the following steps.

C221: When windows blocked by the floating window are two or more first windows in the n first windows, the display device determines at least one candidate location corresponding to each blocked first window.

When the floating window is displayed at the at least one candidate location, the floating window does not block at least the blocked first window and a window whose avoidance priority is higher than an avoidance priority of the blocked first window. In other words, for each candidate location of the first window, the floating window does not block at least the first window and a window whose avoidance priority is higher than the avoidance priority of the first window when the floating window is displayed at a candidate location.

Specifically, for specific descriptions of determining, by the display device, the candidate location of the blocked window, refer to the related descriptions of step A222. Details are not described again. Alternatively, refer to the following descriptions of step D221 to step D223, or refer to the following descriptions of step E221 to step E223.

C222: The display device determines a candidate location with a largest avoidance quantity as the first location, where an avoidance quantity of the candidate location is a quantity of windows that are in the n first windows and that are not blocked when the floating window is displayed at the candidate location.

Specifically, for specific descriptions of a method for determining the first location from the candidate locations by the display device, refer to the descriptions of step A223 to step A225. Details are not described again.

In a possible implementation, when windows blocked by the floating window are two or more first windows in the n first windows, and there are avoidance priorities between the n first windows, in step 202, that the display device determines the first location of the floating window specifically includes the following steps.

D221: The display device determines, from the windows that are blocked by the floating window and that are in the n first windows, one window as a second window.

Specifically, there may be many methods for determining the second window by the display device. Refer to the descriptions of step A221.

D222: The display device determines at least one candidate location of the second window, where the at least one candidate location does not block the second window, and the floating window can be completely displayed at the candidate location.

Specifically, for specific descriptions of determining, by the display device, the candidate location of the second window, refer to the related descriptions of step A222. Details are not described again.

D223: When a window whose avoidance priority is higher than an avoidance priority of the second window is blocked by the floating window displayed at a candidate location, the display device removes the candidate location from the at least one candidate location.

Specifically, for a specific method for determining, by the display device, whether the candidate location causes the floating window to block a window with a higher avoidance priority, refer to related descriptions in step B221. Details are not described again.

D224: When an avoidance quantity of the candidate location is equal to n, the display device uses the candidate location as the first location, and stopping performing the following steps, where the avoidance quantity of the candidate location is a quantity of first windows that are in the n first windows and that are not blocked when the floating window is displayed at the candidate location.

D225: When an avoidance quantity of the candidate location is less than n, the display device records the avoidance quantity of the candidate location.

The display device repeatedly performs step D224 and step D225 until avoidance quantities of all candidate locations of the second window are determined. For a method for selecting the candidate location by the display device, refer to related descriptions in step A224. Details are not described again.

D226: The display device removes the second window from the windows blocked by the floating window, and repeats the foregoing steps until there is no window blocked by the floating window.

D227: The display device uses a candidate location with a largest avoidance quantity in recorded avoidance quantities as the first location.

In another possible implementation, when windows blocked by the floating window are two or more first windows in the n first windows, and there are avoidance priorities between the n first windows, in step 202, that the display device determines the first location of the floating window specifically includes the following steps.

E221: The display device determines, from the windows that are blocked by the floating window and that are in the n first windows, a window with a highest avoidance priority as a second window.

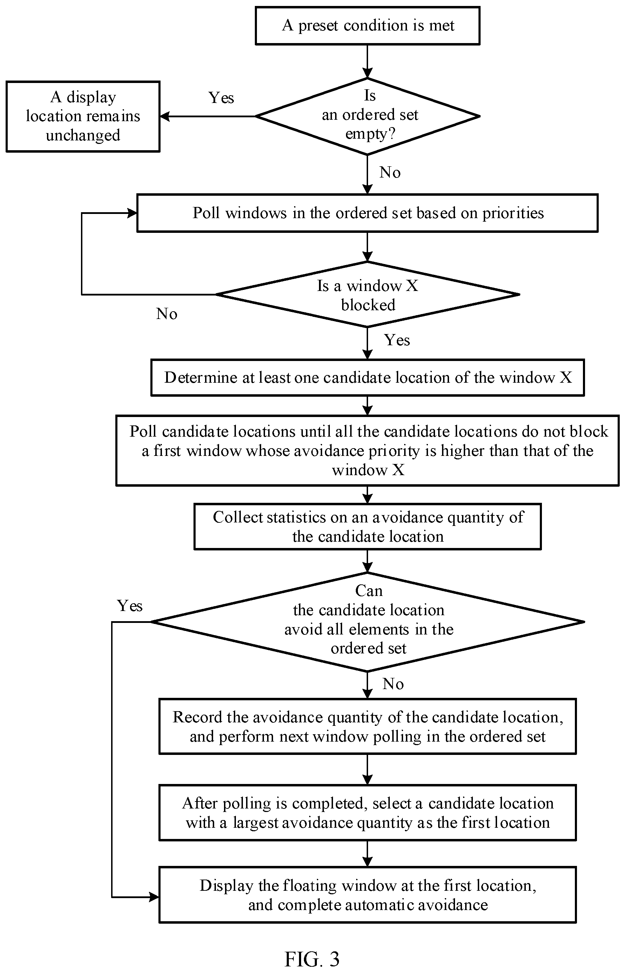

Specifically, there may be many methods for determining the second window by the display device, and the second window may be determined based on the priority table described in step B221. To be specific, the display device establishes a priority table based on the windows that are blocked by the floating window, and then determines, from the priority table, a window with a highest priority as the second window. Alternatively, the display device establishes an ordered set based on the windows that are blocked by the floating window, and then determines, from the ordered set, a window arranged at the forefront as the second window. For details, refer to the following related descriptions of FIG. 3.

E222: The display device determines at least one candidate location of the second window, where the at least one candidate location does not block the second window, and the floating window can be completely displayed at the candidate location.

Specifically, for specific descriptions of determining, by the display device, the candidate location of the second window, refer to the related descriptions of step A222. Details are not described again.

E223: When a window whose avoidance priority is higher than an avoidance priority of the second window is blocked by the floating window displayed at a candidate location, the display device removes the candidate location from the at least one candidate location.

Specifically, for a specific method for determining, by the display device, whether the candidate location causes the floating window to block a window with a higher avoidance priority, refer to related descriptions in step B221. Details are not described again. Alternatively, the display device determines, based on the ordered set described below, whether the window is blocked. For details, refer to related descriptions of FIG. 3 below.

E224: When an avoidance quantity of the candidate location is equal to n, the display device uses the candidate location as the first location, and stopping performing the following steps, where the avoidance quantity of the candidate location is a quantity of first windows that are in the n first windows and that are not blocked when the floating window is displayed at the candidate location.

E225: When an avoidance quantity of the candidate location is less than n, the display device records the avoidance quantity of the candidate location.

The display device repeatedly performs step E224 and step E225 until avoidance quantities of all candidate locations of the second window are determined. For a method for selecting the candidate location by the display device, refer to related descriptions in step A224. Details are not described again.

E226: The display device removes the second window from the windows blocked by the floating window, and repeats the foregoing steps until there is no window blocked by the floating window.

E227: The display device uses a candidate location with a largest avoidance quantity in recorded avoidance quantities as the first location.

It can be learned that, in the method for determining the first location shown in step E221 to step E227, the display device performs polling processing based on the avoidance priority, so that the first location can be determined, a calculation amount of determining the first location can be reduced, and a speed of determining the first location is improved.

In step D225 and step E225, when the avoidance quantity of the candidate location is less than n, if the avoidance quantity of the candidate location is inconsistent with the recorded avoidance quantity of the candidate location, the display device records the avoidance quantity of the candidate location. On the contrary, when the avoidance quantity of the candidate location is consistent with the recorded avoidance quantity of the candidate location, the display device does not record the avoidance quantity of the candidate location. This helps reduce a data volume of the avoidance quantity recorded by the display device, further increases a calculation amount of subsequently determining the first location by the display device based on the avoidance quantity, and improves a speed of determining the first location by the display device.

In step D225 and step E225, when the avoidance quantity of the candidate location is less than n, the avoidance quantity of the candidate location is consistent with the recorded avoidance quantity of the candidate location, and an avoidance priority of a window corresponding to the candidate location is not lower than an avoidance priority of a window corresponding to the recorded candidate location, the display device records the avoidance quantity of the candidate location. On the contrast, the avoidance quantity of the candidate location is consistent with the recorded avoidance quantity of the candidate location, and an avoidance priority of a window corresponding to the candidate location is lower than an avoidance priority of a window corresponding to the recorded candidate location, the display device does not record the avoidance quantity of the candidate location. This helps reduce a data volume of the avoidance quantity recorded by the display device, further increases a calculation amount of subsequently determining the first location by the display device based on the avoidance quantity, and improves a speed of determining the first location by the display device.

In the foregoing step C222, step D227, and step E227, when there are a plurality of candidate locations with the largest avoidance quantity, the display device selects a candidate location corresponding to a window with a highest avoidance priority in the plurality of candidate locations with the largest avoidance quantity as the first location.

For example, it is assumed that the first windows include a window A and a window B, and an avoidance priority of the window B is higher than that of the window A. Candidate locations with a largest avoidance quantity are respectively a location a and a location b, where the location a is obtained based on the window A, and the location b is obtained based on the window B. When an avoidance quantity of the location a is the same as an avoidance quantity of the location b, because the avoidance priority of the window B is higher, a display device uses the location b as a first location.

In a possible embodiment, to facilitate management of the first windows on the display, the display device may add the first windows to an ordered set based on an avoidance priority sequence. An arrangement principle of elements in the ordered set is as follows: A first window with a higher avoidance priority is arranged in front, and a first window with a lower avoidance priority is arranged behind. For example, for first windows A1 and A2 and first windows B1 and B2, an ordered set is {A1, B2, B1, A2}. It can be learned that the first window A1 has a highest avoidance priority, and the first window A2 has a lowest avoidance priority. Based on the ordered set, in step E221, the display device may conveniently and quickly determine the second window, and in step E223, the display device may quickly determine the window whose avoidance priority is higher than the avoidance priority of the second window.

To well describe the ordered set, the following uses step E221 to step E227 as an example for specific descriptions.

FIG. 3 is a specific schematic flowchart of a display method according to an embodiment of this application. In this embodiment, a display device establishes an ordered set based on first windows on a display, and the ordered set changes in real time with display content. Details are as follows.

A floating window on the display device meets a preset condition, for example, there is a new floating window to be displayed. In this embodiment, a new floating window is used as an example. It is assumed that a display location of the floating window is i (the floating window is not actually displayed). In this case, the first windows displayed on the display device at a current moment form the ordered set.

The display device determines whether the ordered set is empty. If the ordered set is empty, the display device maintains the display location of the floating window as i. In other words, the display device displays the floating window at the display location i.

When the ordered set is not empty, the display device polls the windows in the ordered set based on avoidance priorities. One first window in the ordered set is selected as a polled window X each time based on the avoidance priority.

The display device determines whether the polled window X is blocked by the floating window. When the window X is not blocked, the display device continues to poll a next window.

When the window X is blocked, the display device determines, based on the existing display location i of the floating window, at least one candidate location corresponding to the window X. For example, when the window X does not have any candidate location, the display device stops calculating a candidate location of the window X, and returns for polling a next window in the ordered set.

For the at least one candidate location of the window X, when the floating window is displayed at a candidate location, and the floating window blocks a window whose avoidance priority is higher than that of the window X in the ordered set, the display device removes the candidate location. The display device determines all candidate locations of the window X, that is, polls the candidate locations until all candidate locations of the window X do not block the first window whose avoidance priority is higher than that of the window X in the ordered set.

When determining whether a candidate location of the window X causes the floating window to block a window whose avoidance priority is higher than the avoidance priority of the window X when the floating window is displayed at the candidate location, the display device may determine based on an avoidance priority sequence in the ordered set.

For each candidate location of the window X, the display device first collects statistics about an avoidance quantity of the candidate location, and then determines whether the candidate location can avoid all elements in the ordered set. If the candidate location can avoid all elements in the ordered set, the display device terminates calculation, and uses the candidate location as a first location. The display device displays the floating window at the first location, and completes automatic avoidance.

If the candidate location cannot avoid all elements in the ordered set, the display device records an avoidance quantity of the candidate location, and performs next window polling in the ordered set.

After polling is completed, the display device selects a candidate location with a largest avoidance quantity in recorded avoidance quantities as the first location. When there are a plurality of candidate locations with the largest avoidance quantity, the display device selects a candidate location corresponding to a window with a highest avoidance priority in the plurality of candidate locations as the first location. The display device displays the floating window at the first location, and completes automatic avoidance.

In this embodiment of this application, a polling avoidance operation is performed on a display range of the floating window based on the avoidance priority of the first window, to find a most appropriate avoidance location that can display a largest amount of key information.

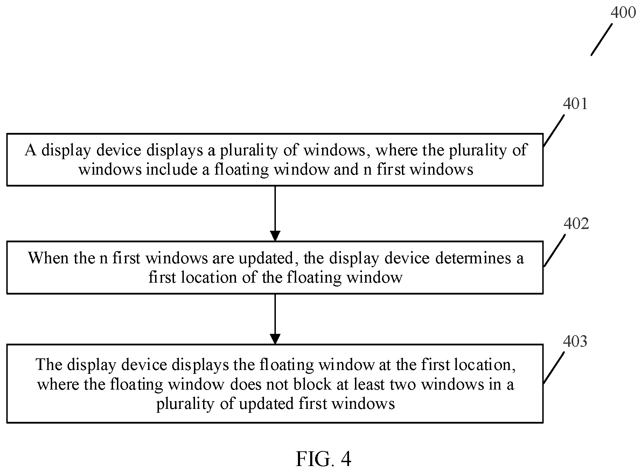

An embodiment of this application further provides a display method. FIG. 4 is a schematic flowchart of another display method according to an embodiment of this application. The display method 400 includes the following steps.

401: A display device displays a plurality of windows, where the plurality of windows include a floating window and n first windows.

Herein, n is an integer greater than or equal to 2, and the first window is a non-floating window. In this embodiment, for descriptions of the first window, refer to the foregoing related descriptions. Details are not described again.

402: When the n first windows are updated, the display device determines a first location of the floating window.

That the n first windows are updated includes that at least one window in the n first windows is replaced and/or a total quantity of windows increases.

Specifically, that the n first windows are updated may be that at least one first window in the n first windows is replaced, that is, as display content of a display changes, a part or all of the first windows are replaced. In this case, a quantity of a plurality of updated first windows is still n.

That the first window is replaced may be understood as that the first window is replaced from a window A to a window B, and the window A and the window B have different display content and different display locations. After a display location of the first window changes, the floating window may block a new first window. Therefore, the display device needs to be triggered to perform the method in this embodiment of this application to determine the first location of the floating window.

That the first window is replaced may alternatively be understood as that a display area of the first window changes (becomes larger or smaller). To be specific, the first window changes from a window a1 to a window a2. Both the window a1 and the window a2 are the window A. Display content of the windows remains unchanged, and an only difference is that display areas of the window a1 and the window a2 are different. After the display area of the first window changes, the floating window may block a new first window (namely, the window a2). Therefore, the display device needs to be triggered to perform the method in this embodiment of this application to determine the first location of the floating window.

That the n first windows are upgraded may be that a total quantity of first windows increases, that is, a first window is added. For example, one first window is added, and the n first windows are changed to n+1 first windows. In this case, the quantity of updated first windows changes from n to n+1.

That the n first windows are updated may alternatively be that at least one first window in the n first windows is replaced and the total quantity of first windows increases. In other words, both a case in which the first window is replaced and a case in which the first window is added exist.

403: The display device displays the floating window at the first location, where the floating window does not block at least two windows in a plurality of updated first windows.

It can be learned that, according to the display method 400 in this embodiment of this application, a user does not need to manually operate the floating window, and the floating window can automatically avoid the first windows. This can increase a quantity of first windows that are not blocked, so that key information of more windows is provided for the user, and use experience of the display device of the user is improved.

In addition, according to the method in this embodiment of this application, an obvious visual effect sacrifice to a display attribute of the first window is not required, for example, zooming, transparency change, and three-dimensional rotation, so that key information is normally displayed to a maximum extent while a screen visual effect is ensured. In addition, in this embodiment of this application, application scenarios of the floating window and the first window are not limited, and the user can start various windows as required.

For example, the first location of the floating window determined in step 402 may be a new display location, or the first location of the floating window may be a display location of the floating window before the n first windows are updated.

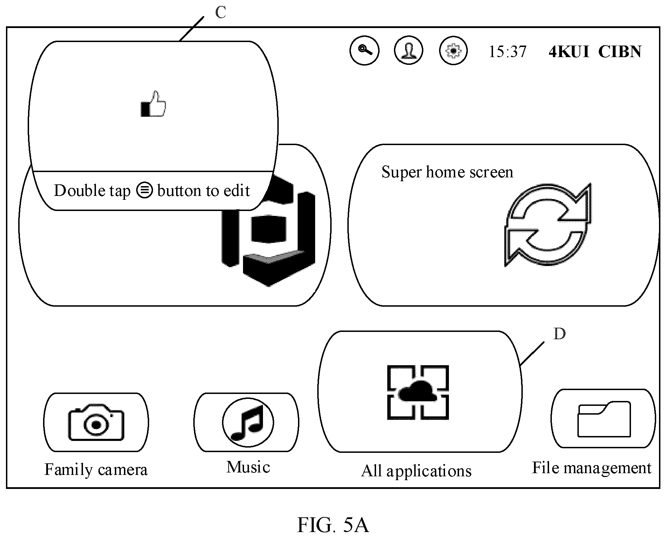

FIG. 5A is a diagram of a first window and a floating window according to an embodiment of this application. A window D is the first window, that is, an application window that is being operated by a user. The window D is not blocked by a floating window C, and the floating window C remains an original display attribute and is displayed at an original display location.

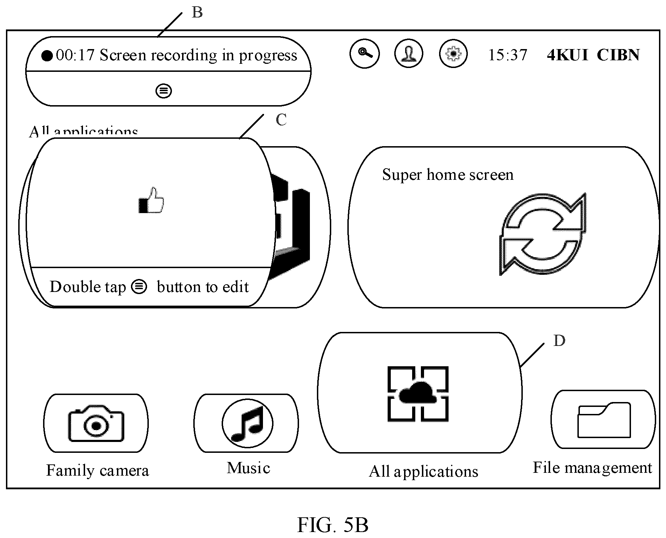

It is assumed that a new window B appears, and the window B (not shown) is blocked by the floating window C. The window B is a "Screen recording in progress" window, and is system prompt information. It is assumed that an avoidance priority of the system prompt information is higher than an avoidance priority of a focused area, that is, an avoidance priority of the window B is higher than an avoidance priority of the window D. A display device re-determines a display location of the floating window C based on the window B. FIG. 5B is another diagram of the first window and the floating window according to an embodiment of this application. The display device moves the floating window C downward to a display location shown in FIG. 5B.

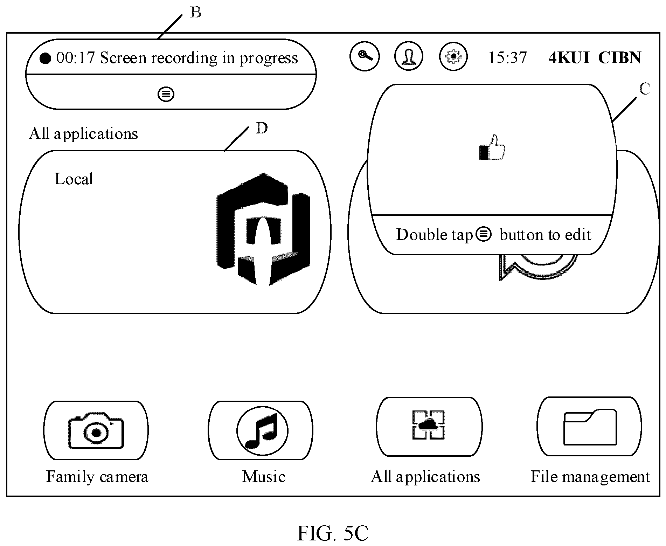

It is assumed that a window being operated by the user changes to a "Local" window, that is, the first window is replaced. In this case, the window D (not shown) is blocked by the floating window C, and the display device re-determines a display location of the floating window C based on the window D. FIG. 5C is another diagram of the first window and the floating window according to an embodiment of this application. The display device moves the floating window C to a display location shown in FIG. 5C.

In a possible implementation, avoidance priorities of a plurality of updated first windows are higher than a priority of another window other than the plurality of first windows in the plurality of windows (that is, the plurality of first windows are objects that need to be avoided). However, when no avoidance priority is set between the plurality of first windows, or when the plurality of windows are the plurality of first windows and no avoidance priority is set between the plurality of first windows, in step 402, that the display device determines the first location of the floating window specifically includes the following steps.

A421: The display device determines, from windows that are blocked by the floating window and that are in the plurality of updated first windows, one window as a target window.

A422: The display device determines at least one candidate location corresponding to the target window, where when the floating window is displayed at the at least one candidate location of the target window, the floating window does not block the target window.

A423: When an avoidance quantity of the candidate location is equal to m, the display device uses the candidate location as the first location, and stops the following steps. The avoidance quantity of the candidate location is a quantity of first windows that are in the m first windows and that are not blocked when the floating window is displayed at the candidate location. Herein, m is a total quantity of the plurality of updated first windows.

A424: When an avoidance quantity of the candidate location is less than m, the display device records the avoidance quantity of the candidate location. After determining avoidance quantities of all candidate locations of the target window in a preset order, the display device removes the target window from the first windows that are blocked by the floating window, and repeats the foregoing steps, that is, returns to step A421, until there is no first window blocked by the floating window.

A425: The display device determines a candidate location with a largest avoidance quantity in recorded avoidance quantities as the first location.

For specific descriptions of step A421 to step A425, refer to related descriptions of step A221 to step A225. Details are not described again.

In a possible implementation, there are avoidance priorities between the first windows. For related descriptions of the avoidance priority, refer to the foregoing related descriptions. Details are not described again. The first window is the n first windows or the plurality of updated first windows.

In a possible implementation, when there are the avoidance priorities between the plurality of updated first windows, in step 402, that the display device determines the first location of the floating window specifically includes the following steps.

B421: When a window blocked by the floating window is one first window in the plurality of updated first windows, the display device determines at least one candidate location corresponding to the blocked first window. When the floating window is displayed at the at least one candidate location, the floating window does not block at least the first window and a window whose avoidance priority is higher than an avoidance priority of the first window.

Specifically, when a window blocked by the floating window is one first window in the plurality of updated first windows, the display device determines the at least one candidate location corresponding to the blocked first window. When the blocked first window has no available candidate location, the display device stops determining the first location.

B422: The display device determines a candidate location with a largest avoidance quantity in the at least one candidate location as the first location. An avoidance quantity of the candidate location is a quantity of first windows that are in the plurality of updated first windows and that are not blocked when the floating window is displayed at the candidate location.

For specific descriptions of step B421 and step B422, refer to related descriptions of step B221 and step B222. Details are not described again.

In a possible implementation, when there are the avoidance priorities between the plurality of updated first windows, in step 402, that the display device determines the first location of the floating window specifically includes the following steps.

C421: When windows blocked by the floating window are two or more first windows in the plurality of updated first windows, the display device determines at least one candidate location corresponding to each blocked first window. When the floating window is displayed at the at least one candidate location, the floating window does not block at least the blocked first window and a window whose avoidance priority is higher than an avoidance priority of the blocked first window.

C422: The display device determines a candidate location with a largest avoidance quantity as the first location. An avoidance quantity of the candidate location is a quantity of first windows that are in the m first windows and that are not blocked when the floating window is displayed at the candidate location, where m is a total quantity of the plurality of updated first windows.

For specific descriptions of step C421 and step C422, refer to related descriptions of step C221 and step C222. Details are not described again.

In a possible implementation, when windows blocked by the floating window are two or more first windows in the plurality of updated first windows, and there are avoidance priorities between the plurality of updated first windows, in step 402, that the display device determines the first location of the floating window specifically includes the following steps.

D421: The display device determines, from the windows that are blocked by the floating window and that are in the plurality of updated first windows, one window as a second window.

D422: The display device determines at least one candidate location of the second window, where the at least one candidate location does not block the second window, and the floating window can be completely displayed at the candidate location.

D423: When a window whose avoidance priority is higher than an avoidance priority of the second window is blocked by the floating window displayed at a candidate location, the display device removes the candidate location from the at least one candidate location.

D424: When an avoidance quantity of the candidate location is equal to m, the display device uses the candidate location as the first location, and stops performing the following steps. Herein, m is a total quantity of the plurality of updated first windows. The avoidance quantity of the candidate location is a quantity of first windows that are in the m first windows and that are not blocked when the floating window is displayed at the candidate location.

D425: When an avoidance quantity of the candidate location is less than m, the display device records the avoidance quantity of the candidate location.

D426: The display device removes the second window from the windows blocked by the floating window, and repeats the foregoing steps until there is no window blocked by the floating window.

D427: The display device uses a candidate location with a largest avoidance quantity in recorded avoidance quantities as the first location.

For specific descriptions of step D421 to step D427, refer to related descriptions of step D221 to step D227. Details are not described again.

In a possible implementation, when windows blocked by the floating window are two or more first windows in the plurality of updated first windows, and there are avoidance priorities between the plurality of updated first windows, in step 402, that the display device determines the first location of the floating window specifically includes the following steps.

E421: The display device determines, from the windows that are blocked by the floating window and that are in the plurality of updated first windows, a window with a highest avoidance priority as a second window.

E422: The display device determines at least one candidate location of the second window, where the at least one candidate location does not block the second window, and the floating window can be completely displayed at the candidate location.

E423: When a window whose avoidance priority is higher than an avoidance priority of the second window is blocked by the floating window displayed at a candidate location, the display device removes the candidate location from the at least one candidate location.

E424: When an avoidance quantity of the candidate location is equal to m, the display device uses the candidate location as the first location, and stops performing the following steps. Herein, m is a total quantity of the plurality of updated first windows. The avoidance quantity of the candidate location is a quantity of first windows that are in the m first windows and that are not blocked when the floating window is displayed at the candidate location.

E425: When an avoidance quantity of the candidate location is less than m, the display device records the avoidance quantity of the candidate location.

E426: The display device removes the second window from the windows blocked by the floating window, and repeats the foregoing steps until there is no window blocked by the floating window.

E427: The display device uses a candidate location with a largest avoidance quantity in recorded avoidance quantities as the first location.

For specific descriptions of step E421 to step E427, refer to related descriptions of step E221 to step E227. Details are not described again.

In a possible implementation, in step D425 and step E425, when the avoidance quantity of the candidate location is less than m, if the avoidance quantity of the candidate location is inconsistent with the recorded avoidance quantity of the candidate location, the display device records the avoidance quantity of the candidate location.

In a possible implementation, in step D425 and step E425, when the avoidance quantity of the candidate location is less than m, if the avoidance quantity of the candidate location is consistent with the recorded avoidance quantity of the candidate location, and an avoidance priority of a window corresponding to the candidate location is not lower than an avoidance priority of a window corresponding to the recorded candidate location, the display device records the avoidance quantity of the candidate location. On the contrast, the avoidance quantity of the candidate location is consistent with the recorded avoidance quantity of the candidate location, and an avoidance priority of a window corresponding to the candidate location is lower than an avoidance priority of a window corresponding to the recorded candidate location, the display device does not record the avoidance quantity of the candidate location.

In a possible implementation, in the foregoing step C422, step D427, and step E427, when there are a plurality of candidate locations with the largest avoidance quantity, the display device selects a candidate location corresponding to a window with a highest avoidance priority in the plurality of candidate locations with the largest avoidance quantity as the first location.

In a possible embodiment, to facilitate management of the first windows on the display, the display device may add the first windows to an ordered set based on an avoidance priority sequence. An arrangement principle of elements in the ordered set is as follows: A first window with a higher avoidance priority is arranged in front, and a first window with a lower avoidance priority is arranged behind. Based on the ordered set, in step E421, the display device may conveniently and quickly determine the second window, and in step E423, the display device may quickly determine the window whose avoidance priority is higher than the avoidance priority of the second window.

To well describe the ordered set, the following uses step E421 to step E427 as an example for specific descriptions.

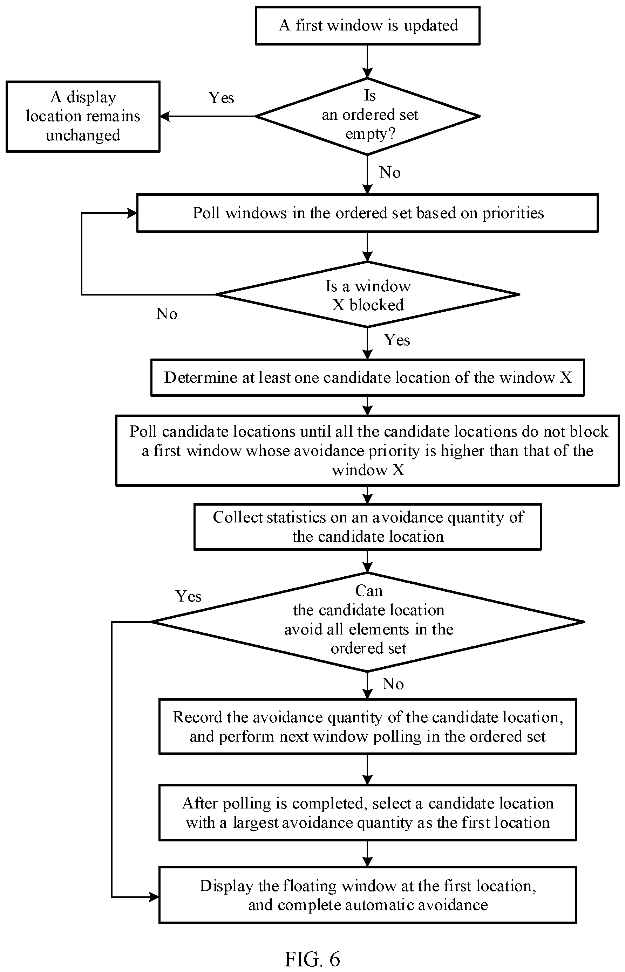

FIG. 6 is a specific schematic flowchart of another display method according to an embodiment of this application.

In this embodiment, a display device establishes an ordered set based on first windows on a display, and the ordered set changes in real time with display content. Details are as follows.

The first window on the display device is updated, for example, a new first window appears. In this embodiment, the new first window is used as an example. It is assumed that a display location of a floating window is i, the display device forms updated first windows displayed on the display device into the ordered set.

The display device determines whether the ordered set is empty. If the ordered set is empty, the display location of the floating window maintains as i.

When the ordered set is not empty, the display device polls the windows in the ordered set based on avoidance priorities.

The display device determines whether a polled window X is blocked by the floating window. When the window X is not blocked, the display device continues to poll a next window.

When the window X is blocked, the display device determines, based on the existing display location i of the floating window, at least one candidate location corresponding to the window X. For example, when the window X does not have any candidate location, the display device stops calculating a candidate location of the window X, and returns for polling a next window in the ordered set.

For the at least one candidate location of the window X, when the floating window is displayed at a candidate location, and the floating window blocks a window whose avoidance priority is higher than that of the window X in the ordered set, the display device removes the candidate location. The display device determines all candidate locations of the window X, that is, polls the candidate locations until all candidate locations of the window X do not block the first window whose avoidance priority is higher than that of the window X in the ordered set.

For each candidate location of the window X, the display device first collects statistics about an avoidance quantity of the candidate location, and then determines whether the candidate location can avoid all elements in the ordered set. If the candidate location can avoid all elements in the ordered set, the display device terminates calculation, and uses the candidate location as a first location. The floating window is displayed at the first location, so that automatic avoidance is completed.

If the candidate location cannot avoid all elements in the ordered set, the display device records an avoidance quantity of the candidate location, and performs next window polling in the ordered set.

After polling is completed, the display device selects a candidate location with a largest avoidance quantity in recorded avoidance quantities as the first location. When there are a plurality of candidate locations with the largest avoidance quantity, the display device selects a candidate location corresponding to a window with a highest avoidance priority in the plurality of candidate locations as the first location. The display device displays the floating window at the first location, and completes automatic avoidance.

In this embodiment of this application, a polling avoidance operation is performed on a display range of the floating window based on the avoidance priority of the first window, to find a most appropriate avoidance location that can display a largest amount of key information.

The following describes an apparatus provided in this application.

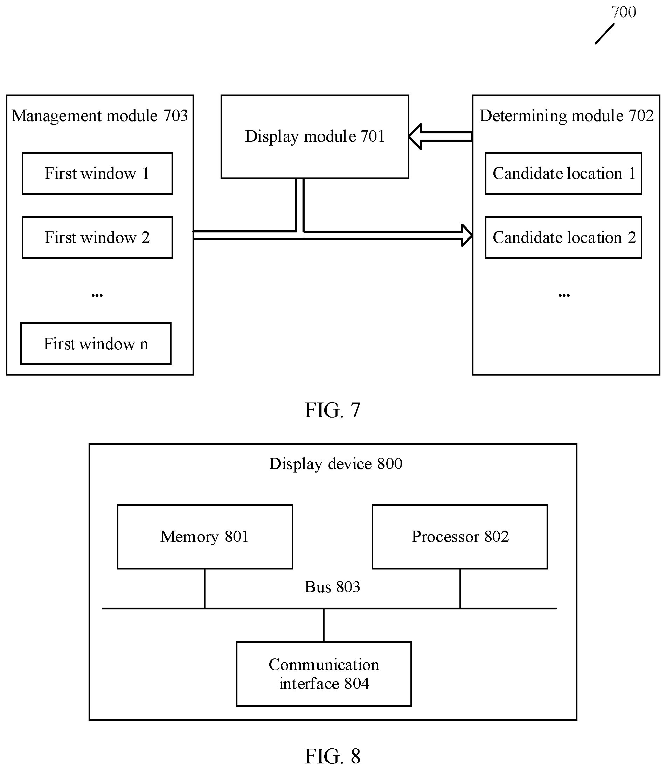

FIG. 7 is a diagram of a structure of a possible display apparatus according to an embodiment of this application. The display apparatus may be configured to implement functions of any one of the foregoing method embodiments, and therefore can also achieve beneficial effects of any one of the foregoing method embodiments. In this embodiment of this application, the display apparatus may be an electronic device, or may be a module (for example, a chip) applied to an electronic device.

As shown in FIG. 7, the display apparatus 700 includes a display module 701 and a determining module 702. The display apparatus 700 is configured to implement functions in the method embodiment shown in FIG. 2. Alternatively, the display apparatus 700 may include modules or units configured to implement any function or operation in the method embodiment shown in FIG. 2 or FIG. 4. The modules or units may be completely or partially implemented by using software, hardware, firmware, or any combination thereof.

For example, when the display apparatus 700 is configured to implement functions in the method embodiment shown in FIG. 2, the display module 701 is configured to display a plurality of windows, where the plurality of windows include n first windows, n is an integer greater than or equal to 2, and the first window is a non-floating window. The determining module 702 is configured to: when a preset condition is met, determine a first location of a floating window. The determining module 702 is configured to: determine candidate locations (for example, a candidate location 1 and a candidate location 2) of the floating window, and select an optimal avoidance location, namely, the first location, from all candidate locations after calculation of all candidate locations is completed. The display module 701 is further configured to display the floating window at the first location, where the floating window does not block at least two windows in the n first windows. The display module 701 stores display information (a relative screen location, a display area size, and the like) of the floating window, and operates the floating window to be displayed at the first location.

In a possible embodiment, with reference to FIG. 7, the display apparatus 700 further includes a management module 703. The management module 703 is configured to manage the first window. For example, the management module 703 manages the first window based on relative degrees of importance to a user by using a priority table or an ordered set, and an order in the table or the set corresponds to a degree of importance of region information. For example, the more top-ranked a region in the table or the set, the more important the region is.

The determining module 702 performs polling calculation based on the display location of the floating window and the first window managed by the management module 703. Each candidate location obtained through calculation is recorded by the determining module 702. After polling is completed, an optimal avoidance location (the first location) is selected from all recorded candidate locations, the determining module 702 then indicates the display module 701 to refresh corresponding display information, and display the floating window at the first location.

The display apparatus 700 can automatically avoid a plurality of first windows at the same time, so that an information blocking prevention capability of the display apparatus 700 can be significantly improved.

For another example, when the display apparatus 700 is configured to implement functions in the method embodiment shown in FIG. 4, the display module 701 is configured to display a plurality of windows, where the plurality of windows include a floating window and n first windows, n is an integer greater than or equal to 2, and the first window is a non-floating window. The determining module 702 is configured to: when the n first windows are updated, determine a first location of the floating window, where the update includes that at least one window in the n first windows is replaced and/or a total quantity of windows increases. The determining module 702 is configured to: determine candidate locations (for example, a candidate location 1 and a candidate location 2) of the floating window, and select an optimal avoidance location, namely, the first location, from all candidate locations after calculation of all candidate locations is completed. The display module 701 is further configured to display the floating window at the first location, where the floating window does not block at least two windows in a plurality of updated first windows. The display module 701 stores display information (a relative screen location, a display area size, and the like) of the floating window, and operates the floating window to be displayed at the first location.

In a possible embodiment, with reference to FIG. 7, the display apparatus 700 further includes a management module 703. The management module 703 is configured to manage the first window, including the n first windows or the plurality of updated first windows. For example, the management module 703 manages the first window based on relative degrees of importance to a user by using a priority table or an ordered set, and an order in the table or the set corresponds to a degree of importance of region information. For example, the more top-ranked a region in the table or the set, the more important the region is.

This application further provides a display device. FIG. 8 is a diagram of a structure of a display device according to an embodiment of the present invention. A display device 800 includes a memory 801, a processor 802, a communication interface 804, and a bus 803. The memory 801, the processor 802, and the communication interface 804 are in communication connection to each other through the bus 803.

The memory 801 may be a read only memory (Read Only Memory, ROM), a static storage device, a dynamic storage device, or a random access memory (Random Access Memory, RAM). The memory 801 may store a program. When the program stored in the memory 801 is executed by the processor 802, the processor 802 and the communication interface 804 are configured to perform steps of the display method in embodiments of this application.

The processor 802 may be a general-purpose central processing unit (Central Processing Unit, CPU), a microprocessor, an application-specific integrated circuit (Application-specific Integrated Circuit, ASIC), a graphics processing unit (graphics processing unit, GPU), or one or more integrated circuits, and is configured to execute a related program, to implement a function that needs to be performed by a unit in the display apparatus in any embodiment of this application, or perform the display method in any embodiment of this application.

The processor 802 may be an integrated circuit chip and has a signal processing capability. In an implementation process, the steps of the display method in embodiments of this application may be completed by using an integrated logic circuit of hardware or instructions in a form of software in the processor 802. The foregoing processor 802 may be a general purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the display method with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 801. The processor 802 reads information in the memory 801, and completes, in combination with hardware of the processor 802, functions that need to be performed by the units included in the display apparatus in embodiments of this application, or performs the display method in embodiments of this application.

The communication interface 804 uses a transceiver apparatus, for example but not limited to a transceiver, to implement communication between the display device 800 and another device or a communication network.

The bus 803 may include a path for transmitting information between components (for example, the memory 801, the processor 802, and the communication interface 804) of the display device 800.

In the several embodiments provided in this application, it should be understood that the disclosed apparatus and method may be implemented in other manners.

In addition, function units in embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, wherein the method comprises:
displaying a plurality of windows, wherein the plurality of windows comprise n first windows, n is an integer greater than or equal to 2, and the first window is a non-floating window;
when a preset condition is met, determining a first location of a floating window; and
displaying the floating window at the first location, wherein the floating window does not block at least two windows in the n first windows.

2. The method according to claim 1, wherein the preset condition comprises any one of the following:
the floating window is added;
a display location of the floating window is updated; or
a display area of the floating window is updated.

3. The method according to claim 1 or 2, wherein there are avoidance priorities between the n first windows.

4. The method according to claim 3, wherein determining the first location of the floating window comprises:
when a window blocked by the floating window is one first window in the n first windows, determining at least one candidate location corresponding to the first window, wherein when the floating window is displayed at the at least one candidate location, the floating window does not block at least the first window and a window whose avoidance priority is higher than an avoidance priority of the first window; and
determining a candidate location with a largest avoidance quantity in the at least one candidate location as the first location, wherein an avoidance quantity of the candidate location is a quantity of first windows that are in the n first windows and that are not blocked when the floating window is displayed at the candidate location.

5. The method according to claim 3, wherein determining the first location of the floating window comprises:
when windows blocked by the floating window are two or more first windows in the n first windows, determining at least one candidate location corresponding to each blocked first window, wherein when the floating window is displayed at the at least one candidate location, the floating window does not block at least the blocked first window and a window whose avoidance priority is higher than an avoidance priority of the blocked first window; and
determining a candidate location with a largest avoidance quantity as the first location, wherein an avoidance quantity of the candidate location is a quantity of first windows that are in the n first windows and that are not blocked when the floating window is displayed at the candidate location.

6. The method according to claim 3, wherein when windows blocked by the floating window are two or more first windows in the n first windows, determining the first location of the floating window comprises:
determining, from the windows that are blocked by the floating window and that are in the n first windows, one window as a second window;
determining at least one candidate location of the second window, wherein the at least one candidate location does not block the second window, and the floating window can be completely displayed at the candidate location;
when a window whose avoidance priority is higher than an avoidance priority of the second window is blocked by the floating window displayed at a candidate location, removing the candidate location from the at least one candidate location;
when an avoidance quantity of the candidate location is equal to n, using the candidate location as the first location, and stopping performing the following steps, wherein the avoidance quantity of the candidate location is a quantity of first windows that are in the n first windows and that are not blocked when the floating window is displayed at the candidate location;
when an avoidance quantity of the candidate location is less than n, recording the avoidance quantity of the candidate location;
removing the second window from the windows blocked by the floating window, and repeating the foregoing steps until there is no window blocked by the floating window; and
using a candidate location with a largest avoidance quantity in recorded avoidance quantities as the first location.

7. The method according to claim 3, wherein when windows blocked by the floating window are two or more first windows in the n first windows, determining the first location of the floating window comprises:
determining, from the windows that are blocked by the floating window and that are in the n first windows, a window with a highest avoidance priority as a second window;
determining at least one candidate location of the second window, wherein the at least one candidate location does not block the second window, and the floating window can be completely displayed at the candidate location;
when a window whose avoidance priority is higher than an avoidance priority of the second window is blocked by the floating window displayed at a candidate location, removing the candidate location from the at least one candidate location;
when an avoidance quantity of the candidate location is equal to n, using the candidate location as the first location, and stopping performing the following steps, wherein the avoidance quantity of the candidate location is a quantity of first windows that are in the n first windows and that are not blocked when the floating window is displayed at the candidate location;
when an avoidance quantity of the candidate location is less than n, recording the avoidance quantity of the candidate location;
removing the second window from the windows blocked by the floating window, and repeating the foregoing steps until there is no window blocked by the floating window; and
using a candidate location with a largest avoidance quantity in recorded avoidance quantities as the first location.

8. The method according to claim 6 or 7, wherein when the avoidance quantity of the candidate location is less than n, if the avoidance quantity of the candidate location is inconsistent with the recorded avoidance quantity of the candidate location, or when the avoidance quantity of the candidate location is consistent with the recorded avoidance quantity of the candidate location, and an avoidance priority of a window corresponding to the candidate location is not lower than an avoidance priority of a window corresponding to the recorded candidate location, the avoidance quantity of the candidate location is recorded.

9. The method according to any one of claims 5 to 8, wherein when there are a plurality of candidate locations with the largest avoidance quantity, a candidate location corresponding to a window with a highest avoidance priority in the plurality of candidate locations with the largest avoidance quantity is selected as the first location.

10. A display method, wherein the method comprises:
displaying a plurality of windows, wherein the plurality of windows comprise a floating window and n first windows, n is an integer greater than or equal to 2, and the first window is a non-floating window;
when the n first windows are updated, determining a first location of the floating window, wherein the update comprises that at least one window in the N first windows is replaced and/or a total quantity of windows increases; and
displaying the floating window at the first location, wherein the floating window does not block at least two windows in a plurality of updated first windows.

11. The method according to claim 10, wherein there are avoidance priorities between the first windows.

12. The method according to claim 11, wherein determining the first location of the floating window comprises:
when a window blocked by the floating window is one first window in the plurality of updated first windows, determining at least one candidate location corresponding to the blocked first window, wherein when the floating window is displayed at the at least one candidate location, the floating window does not block at least the first window and a window whose avoidance priority is higher than an avoidance priority of the first window; and
determining a candidate location with a largest avoidance quantity in the at least one candidate location as the first location, wherein an avoidance quantity of the candidate location is a quantity of first windows that are in the plurality of updated first windows and that are not blocked when the floating window is displayed at the candidate location.

13. The method according to claim 11, wherein determining the first location of the floating window comprises:
when windows blocked by the floating window are two or more first windows in the plurality of updated first windows, determining at least one candidate location corresponding to each blocked first window, wherein when the floating window is displayed at the at least one candidate location, the floating window does not block at least the blocked first window and a window whose avoidance priority is higher than an avoidance priority of the blocked first window; and
determining a candidate location with a largest avoidance quantity as the first location, wherein an avoidance quantity of the candidate location is a quantity of first windows that are in the plurality of updated first windows and that are not blocked when the floating window is displayed at the candidate location.

14. The method according to claim 13, wherein when there are a plurality of candidate locations with the largest avoidance quantity, a candidate location corresponding to a window with a highest avoidance priority in the plurality of candidate locations with the largest avoidance quantity is selected as the first location.

15. A display device, comprising a processor and a memory, wherein the processor is connected to the memory, the memory is configured to store a program, and the processor is configured to invoke the program to perform the display method according to any one of claims 1 to 14.
